# EUROPEAN PATENT APPLICATION

(11) **EP 4 564 878 A1**
(43) Date of publication of application: **04.06.2025**
(21) Application number: 23845606.5
(22) Date of filing: 26.07.2023
(51) Int. Cl.: H04W 16/18, H04W 36/34, H04W 48/16, H04W 76/11, H04L 12/28

(54) **METHOD FOR ACQUIRING NETWORK SELECTION INFORMATION OF HOSTED NETWORK, TERMINAL, AND NETWORK SIDE DEVICE**

(30) Priority: 29.07.2022 CN 202210911314
(71) Applicant: Vivo Mobile Communication Co., Ltd., Dongguan, Guangdong 523863 (CN)
(72) Inventor: ZHANG, Pengfei, Dongguan, Guangdong 523863 (CN)
(74) Representative: Murgitroyd & Company
(86) International application number: PCT/CN2023/109384
(87) International publication number: WO 2024/022398

(57) **Abstract**

This application discloses a method for obtaining network selection information of a hosting network, a terminal, and a network side device, and pertains to the field of communication technologies. The method for obtaining network selection information of a hosting network according to an embodiment of the present invention includes: A terminal receives steering of roaming SOR information sent by a first network side device, where the SOR information includes a network selection information field of the hosting network and a first indication field of the hosting network, or the SOR information includes a network selection information field of a conventional network, and the network selection information field of the conventional network includes the network selection information field of the hosting network and the first indication field of the hosting network. The network selection information field of the hosting network is used to carry the network selection information of the hosting network, and the first indication field is used to indicate whether the network selection information of the hosting network is carried.

## Description

### CROSS-REFERENCE TO RELATED APPLICATION

This application claims priority to Chinese Patent Application No. 202210911314.1, filed with the China National Intellectual Property Administration on July 29, 2022, which is incorporated herein by reference in its entirety.

### TECHNICAL FIELD

This application pertains to the field of communication technologies, and in particular, relates to a method for obtaining network selection information of a hosting network, a terminal, and a network side device.

### BACKGROUND

There may be a plurality of types of networks available at a same moment at a same location. For example, a hosting network may be deployed at a specific time and location, and a terminal may access the hosting network to obtain a local service at the time and location. The hosting network may be a hosting SNPN, and the hosting SNPN refers to a stand-alone non-public network (Stand-alone Non-Public Network, SNPN) that is available at a specific time and location.

Before accessing the hosting network, the terminal needs to perform network selection and access based on network selection information of the hosting network. Therefore, for a person skilled in the art, how the terminal obtains the network selection information of the hosting network is an urgent technical problem to be solved.

### SUMMARY

Embodiments of the present invention provide a method for obtaining network selection information of a hosting network, a terminal, and a network side device, to solve a problem of how to obtain network selection information of a hosting network.

According to a first aspect, a method for obtaining network selection information of a hosting network is provided, and is applied to a terminal. The method includes: receiving steering of roaming SOR information sent by a first network side device, where the SOR information includes a network selection information field and a first indication field of the hosting network, or the SOR information includes a network selection information field of a conventional network, the network selection information field of the conventional network includes the network selection information field and the first indication field of the hosting network, the network selection information field of the hosting network is used to carry the network selection information of the hosting network, and the first indication field is used to indicate whether the network selection information of the hosting network is carried.

According to a second aspect, a method for obtaining network selection information of a hosting network is provided, and is applied to a network side device. The method includes:
sending steering of roaming SOR information to a terminal, where the SOR information includes a network selection information field and a first indication field of the hosting network, or the SOR information includes a network selection information field of a conventional network, the network selection information field of the conventional network includes the network selection information field and the first indication field of the hosting network, the network selection information field of the hosting network is used to carry the network selection information of the hosting network, and the first indication field is used to indicate whether the network selection information of the hosting network is carried.

According to a third aspect, an apparatus for obtaining network selection information of a hosting network is provided, including:
a receiving module, configured to receive steering of roaming SOR information sent by a first network side device, where the SOR information includes a network selection information field and a first indication field of the hosting network, or the SOR information includes a network selection information field of a conventional network, the network selection information field of the conventional network includes the network selection information field and the first indication field of the hosting network, the network selection information field of the hosting network is used to carry the network selection information of the hosting network, and the first indication field is used to indicate whether the network selection information of the hosting network is carried.

According to a fourth aspect, an apparatus for obtaining network selection information of a hosting network is provided, including:
a sending module, configured to send steering of roaming SOR information to a terminal, where the SOR information includes a network selection information field and a first indication field of the hosting network, or the SOR information includes a network selection information field of a conventional network, the network selection information field of the conventional network includes the network selection information field and the first indication field of the hosting network, the network selection information field of the hosting network is used to carry the network selection information of the hosting network, and the first indication field is used to indicate whether the network selection information of the hosting network is carried.

According to a fifth aspect, a terminal is provided. The terminal includes a processor and a memory, where the memory stores a program or instructions executable on the processor, and when the program or instructions are executed by the processor, the steps of the method for obtaining network selection information of a hosting network according to the first aspect are implemented.

According to a sixth aspect, a terminal is provided, including a processor and a communication interface, where the communication interface is configured to receive steering of roaming SOR information sent by a first network side device, where the SOR information includes a network selection information field and a first indication field of a hosting network, or the SOR information includes a network selection information field of a conventional network, the network selection information field of the conventional network includes the network selection information field and the first indication field of the hosting network, the network selection information field of the hosting network is used to carry network selection information of the hosting network, and the first indication field is used to indicate whether the network selection information of the hosting network is carried.

According to a seventh aspect, a network side device is provided. The network side device includes a processor and a memory, where the memory stores a program or instructions executable on the processor, and when the program or instructions are executed by the processor, the steps of the method for obtaining network selection information of a hosting network according to the first aspect are implemented.

According to an eighth aspect, a network side device is provided, including a processor and a communication interface, where the communication interface is configured to send steering of roaming SOR information to a terminal, where the SOR information includes a network selection information field and a first indication field of a hosting network, or the SOR information includes a network selection information field of a conventional network, the network selection information field of the conventional network includes the network selection information field and the first indication field of the hosting network, the network selection information field of the hosting network is used to carry network selection information of the hosting network, and the first indication field is used to indicate whether the network selection information of the hosting network is carried.

According to a ninth aspect, a communication system is provided, including a terminal and a network side device, where the terminal may be configured to perform the method for obtaining network selection information of a hosting network according to the first aspect, and the network side device may be configured to perform the method for obtaining network selection information of a hosting network according to the second aspect.

According to a tenth aspect, a readable storage medium is provided, where the readable storage medium stores a program or instructions, and when the program or instructions are executed by a processor, the steps of the method for obtaining network selection information of a hosting network according to the first aspect are implemented, or the steps of the method for obtaining network selection information of a hosting network according to the second aspect are implemented.

According to an eleventh aspect, a chip is provided. The chip includes a processor and a communication interface, where the communication interface is coupled to the processor, and the processor is configured to run a program or instructions to implement the method for obtaining network selection information of a hosting network according to the first aspect, or the method for obtaining network selection information of a hosting network according to the second aspect.

According to a twelfth aspect, a computer program/program product is provided. The computer program/program product is stored in a storage medium, and the computer program/program product is executed by at least one processor to implement the method for obtaining network selection information of a hosting network according to the first aspect or the second aspect.

In the embodiments of the present invention, the network selection information field and the first indication field of the hosting network are carried in the SOR information, or the network selection information field and the first indication field of the hosting network are added to the network selection information field of the conventional network in the SOR information, so that the terminal can accurately and quickly determine whether the SOR information carries the network selection information of the hosting network based on the SOR information or the first indication field in the network selection information field of the conventional network in the SOR information, and can further accurately obtain the network selection information of the hosting network based on the network selection information field of the hosting network. Therefore, the terminal can select and access a hosting network based on the obtained network selection information of the hosting network.

### BRIEF DESCRIPTION OF DRAWINGS

FIG. 1 is a diagram of a structure of a wireless communication system to which an embodiment of the present invention is applicable;
FIG. 2 is a first schematic flowchart of a method for obtaining network selection information of a hosting network according to an embodiment of the present invention;
FIG. 3 is a first schematic diagram of a coding manner of network selection information of a hosting network according to an embodiment of the present invention;
FIG. 4 is a second schematic diagram of a coding manner of network selection information of a hosting network according to an embodiment of the present invention;
FIG. 5 is a third schematic diagram of a coding manner of network selection information of a hosting network according to an embodiment of the present invention;
FIG. 6 is a fourth schematic diagram of a coding manner of network selection information of a hosting network according to an embodiment of the present invention;
FIG. 7 is a first schematic diagram of capability indication information of a terminal according to an embodiment of the present invention;
FIG. 8 is a first schematic interactive flowchart of a method for obtaining network selection information of a hosting network according to an embodiment of the present invention;
FIG. 9 is a second schematic interactive flowchart of a method for obtaining network selection information of a hosting network according to an embodiment of the present invention;
FIG. 10 is a fifth schematic diagram of a coding manner of network selection information of a hosting network according to an embodiment of the present invention;
FIG. 11 is a schematic diagram of coding of time validity information of a hosting network according to an embodiment of the present invention;
FIG. 12 to FIG. 15 are schematic diagrams of coding of location validity information of a hosting network according to an embodiment of the present invention;
FIG. 16 is a second schematic flowchart of a method for obtaining network selection information of a hosting network according to an embodiment of the present invention;
FIG. 17 is a first schematic diagram of an apparatus for obtaining network selection information of a hosting network according to an embodiment of the present invention;
FIG. 18 is a second schematic diagram of an apparatus for obtaining network selection information of a hosting network according to an embodiment of the present invention;
FIG. 19 is a schematic diagram of a structure of a communication device according to an embodiment of the present invention;
FIG. 20 is a schematic diagram of a hardware structure of a terminal according to an embodiment of the present invention; and
FIG. 21 is a schematic diagram of a structure of a network side device according to an embodiment of the present invention.

### DESCRIPTION OF EMBODIMENTS

The following clearly describes the technical solutions in the embodiments of the present invention with reference to the accompanying drawings in the embodiments of the present invention. Clearly, the described embodiments are some rather than all of the embodiments of this application. Based on the embodiments of this application, all other embodiments obtained by a person of ordinary skill in the art fall within the protection scope of this application.

The terms such as "first" and "second" in the specification and claims of this application are intended to distinguish between similar objects, but are not intended to describe a specific sequence or order. It should be understood that the terms used in such a way may be interchanged under appropriate circumstances so that the embodiments of this application can be implemented in an order other than those illustrated or described herein, the objects distinguished by "first" and "second" are usually of one type, and a quantity of objects is not limited. For example, one or more first objects may be provided. In addition, "and/or" in the specification and the claims indicates at least one of connected objects, and the character "/" generally indicates an "or" relationship between associated objects.

It should be noted that the technologies described in the embodiments of the present invention are not limited to a long term evolution (Long Term Evolution, LTE)/LTE-advanced (LTE-Advanced, LTE-A) system, and may be also applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier-frequency division multiple access (Single-carrier Frequency Division Multiple Access, SC-FDMA), and other systems. The terms "system" and "network" in the embodiments of the present invention are often used interchangeably, and the described technology can be applied to the systems and radio technologies mentioned above, and can be also applied to other systems and radio technologies. The following description describes a new radio (New Radio, NR) system for example purposes, and NR terms are used in most of the following descriptions, but these technologies can be also applied to applications other than NR system applications, such as 6th generation (6^{th} Generation, 6G) communication systems.

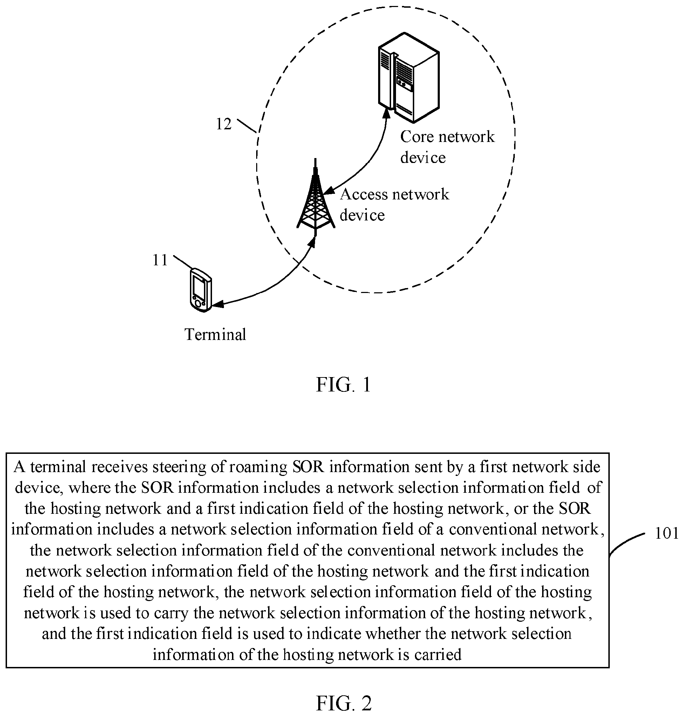

FIG. 1 is a block diagram of a wireless communication system to which an embodiment of the present invention is applicable. The wireless communication system includes a terminal 11 and a network side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a household device with a wireless communication function, such as a refrigerator, a television, a washing machine, or furniture), a game console, a personal computer (personal computer, PC), an automated teller machine or a self-service machine, or other terminal-side devices. The wearable device includes a smartwatch, a smart band, a smart headset, smart glasses, smart jewelry (a smart bracelet, a smart chain bracelet, a smart ring, a smart necklace, a smart anklet, a smart ankle chain, or the like), a smart wrist strap, a smart garment, or the like. It should be noted that a specific type of the terminal 11 is not limited in this embodiment of the present invention. The network side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point or a WiFi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP) or some other appropriate term in the field. As long as a same technical effect is achieved, the base station is not limited to a specific technical vocabulary. It should be noted that, in this embodiment of the present invention, only a base station in an NR system is described as an example, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, or L-NEF), a binding support function (Binding Support Function, BSF), an Application Function (Application Function, AF), and the like. It should be noted that, in this embodiment of the present invention, only a core network device in an NR system is described as an example, and a specific type of the core network device is not limited.

A method for obtaining network selection information of a hosting network according to an embodiment of the present invention is described in detail below through some embodiments and application scenarios thereof with reference to the accompanying drawings.

FIG. 2 is a first schematic flowchart of a method for obtaining network selection information of a hosting network according to an embodiment of the present invention. As shown in FIG. 2, the method provided in this embodiment includes:
Step 101: A terminal receives steering of roaming SOR information sent by a first network side device, where the SOR information includes a network selection information field and a first indication field of the hosting network, or the SOR information includes a network selection information field of a conventional network, the network selection information field of the conventional network includes the network selection information field and the first indication field of the hosting network, the network selection information field of the hosting network is used to carry the network selection information of the hosting network, and the first indication field is used to indicate whether the network selection information of the hosting network is carried.

Specifically, there may be a plurality of types of networks available at a same moment at a same location. For example, a hosting network may be deployed at a specific time and location, and a terminal may access the hosting network to obtain a local service at the time and location. To enable the terminal to quickly and accurately obtain the network selection information of the hosting network, in this embodiment of the present invention, the network side device sends the SOR information including the network selection information of the hosting network to the terminal.

Optionally, the SOR information includes a network selection information field and a first indication field of the hosting network, where the network selection information field of the hosting network is used to carry the network selection information of the hosting network, and the first indication field is used to indicate whether the network selection information of the hosting network is carried, so that the terminal can accurately and quickly determine whether the SOR information carries the network selection information of the hosting network based on the first indication field.

Optionally, in a case that the first indication field indicates that the network selection information of the hosting network is carried, the terminal can obtain the network selection information of the hosting network from the network selection information field of the hosting network, and then the terminal can select an appropriate hosting network and access the hosting network based on the obtained network selection information of the hosting network. That is, by receiving the SOR (Steering of Roaming) information that includes the network selection information of the hosting network and that is sent by the network side device, the terminal can select an appropriate hosting network for access based on the network selection information of the hosting network in the SOR information. The SOR information sent by the network side device in the related technology is used to steer roaming behavior of the terminal, and the SOR information sent by the network side device in this embodiment of the present invention includes the network selection information of the hosting network that is needed by the terminal to select a hosting network.

Optionally, the first network side device is a UDM device of a home network of the terminal, and the network selection information of the hosting network may include network selection information of a hosting SNPN, where the hosting SNPN refers to a stand-alone non-public network available at a specific time and location. Optionally, the first network side device UDM may alternatively send a first request message to a second network side device, requests and receives the network selection information of the hosting network fed back by the second network side device, and then sends the network selection information of the hosting network to the terminal. Optionally, the second network side device may be a steering of roaming application function SOR AF. Correspondingly, after receiving the SOR information including the network selection information of the hosting SNPN, the terminal can select and access a hosting SNPN based on the network selection information of the hosting SNPN in the SOR information.

For example, the network selection information of the hosting SNPN is added to a SOR container (SOR transparent container). The SOR container includes, for example, the following information:
a. a list of preferred network/access technology combinations (list of preferred PLMN/access technology combinations with an indication that it is included);
b. stand-alone non-public network information (SOR-SNPN-SI); and
c. network selection information of a hosting SNPN (Steering of Roaming- hosting-Stand-alone Non-Public Network- selection information, SOR-hosting SNPN-SI).

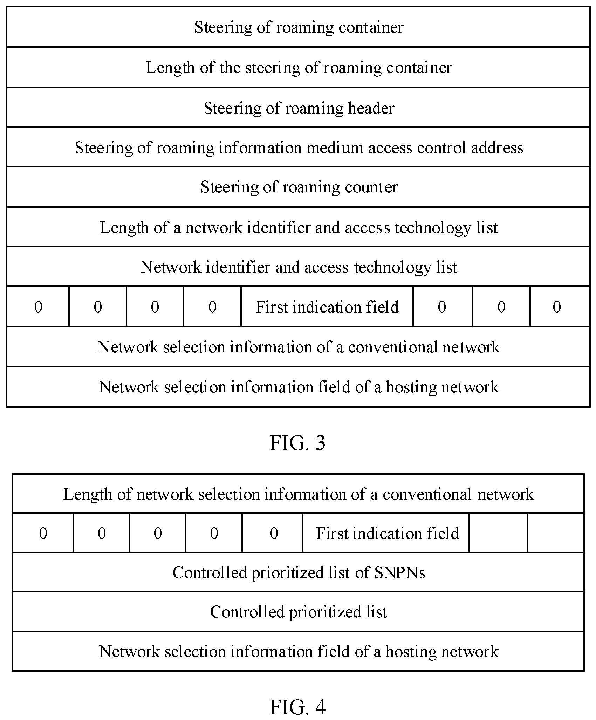

For example, as shown in FIG. 3, network selection information of a hosting network is added to a SOR container (SOR transparent container). That is, a network selection information field (SOR-Hosting-SNPN-SI) and a first indication field (SHSSI) of the hosting network are added to SOR information. The network selection information field of the hosting network is used to carry the network selection information of the hosting network, and the first indication field is used to indicate whether the network selection information of the hosting network is carried. It should be noted that each row in FIG. 3 corresponds to one byte, and each row includes 8 bits in total. The 8 bits are used for information coding.

Optionally, the network selection information field of the conventional network in the SOR information may alternatively be enhanced. That is, the network selection information field and the first indication field of the hosting network are added to the network selection information field of the conventional network in the SOR information. This improves information utilization and reduces resource consumption in a case that the terminal obtains the network selection information of the hosting network.

For example, as shown in FIG. 4, a network selection information field (SOR-SNPN-SI) of a conventional network is enhanced in a SOR container (SOR transparent container), and a network selection information field of a hosting network is added to the network selection information field of the conventional network. That is, the network selection information field (SOR-Hosting-SNPN-SI) of the hosting network is used as a part of the network selection information field of the conventional network.

For example, as shown below, the network selection information field of the conventional network includes the following content, and also includes the network selection information field of the hosting network:
a) a controlled prioritized list of SNPNs (the credentials holder controlled prioritized list of preferred SNPNs);
b) a controlled prioritized list of GINs (the credentials holder controlled prioritized list of GINs); and
c) a network selection information field (SOR-Hosting-SNPN-SI) of the hosting network.

In the method of the above embodiment, the network selection information field and the first indication field of the hosting network are carried in the SOR information, or the network selection information field and the first indication field of the hosting network are added to the network selection information field of the conventional network in the SOR information, so that the terminal can accurately and quickly determine whether the SOR information carries the network selection information of the hosting network based on the SOR information or the first indication field in the network selection information field of the conventional network in the SOR information, and can further accurately obtain the network selection information of the hosting network based on the network selection information field of the hosting network, so that the terminal can select and access a hosting network based on the obtained network selection information of the hosting network.

In an embodiment, the network selection information of the hosting network includes at least one of the following:
an identifier of the hosting network, time validity information of the hosting network, location validity information of the hosting network, and local service information provided by the hosting network.

Specifically, the network selection information of the hosting network includes the identifier of the hosting network, the time validity information of the hosting network, the location validity information of the hosting network, and the local service information provided by the hosting network. That is, the hosting network is effective. Based on an identifier of each hosting network, time validity information of the hosting network, location validity information of the hosting network, and local service information provided by the hosting network in the network selection information of the hosting network, it can be determined which hosting networks are available to the terminal, an available time range of each hosting network, location validity information of each hosting network, and local service information that can be provided by each hosting network. Further, based on specific content in the network selection information of the hosting networks, the terminal can select an appropriate hosting network, access the hosting network and perform a normal service in the hosting network within an available time range and an available location range corresponding to the hosting network.

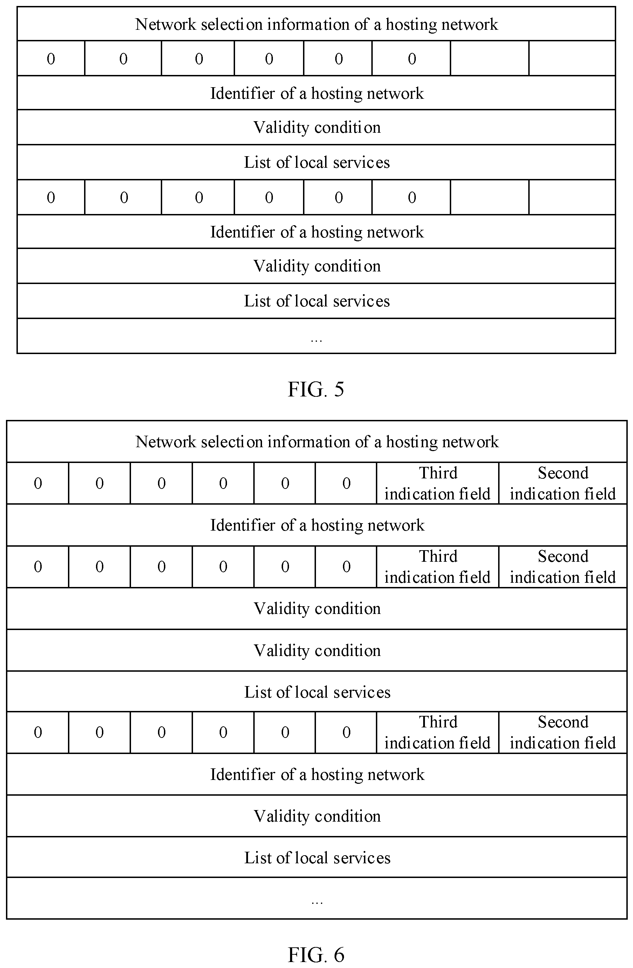

Optionally, as shown in FIG. 5, a network selection information field of hosting networks includes: identifiers of the hosting networks (list of hosting SNPNs), local service information (List of local service) provided by the hosting networks, and a validity condition of the hosting networks, where the validity condition of the hosting networks includes at least one of the following: time validity information of the hosting networks and location validity information of the hosting networks.

In the method of the above embodiment, the network selection information of each hosting network includes an identifier of the hosting network, time validity information of the hosting network, location validity information of the hosting network, and local service information provided by the hosting network, so that based on the network selection information of the hosting networks, the terminal can determine which hosting networks are available to the terminal, an available time range of the hosting networks, location validity information of the hosting networks, and local service information that can be provided by the hosting networks, and therefore the terminal can select an appropriate hosting network and access the hosting network based on the network selection information of the hosting networks.

In an embodiment, the SOR information is carried by a SOR transparent container; and
the SOR transparent container includes the network selection information field and the first indication field of the hosting network, or
the SOR transparent container includes the network selection information field of the conventional network, and the network selection information field of the conventional network includes the network selection information field and the first indication field of the hosting network.

Specifically, in the related technology, the SOR information sent by the network side device is used to steer roaming behavior of the terminal. In this embodiment of the present invention, to enable the terminal to quickly and accurately obtain the network selection information of the hosting network, SOR information is carried by the SOR transparent container, that is, the network selection information field and the first indication field of the hosting network are carried by the SOR transparent container, or the network selection information field of the conventional network including the network selection information field and the first indication field of the hosting network is carried by the SOR transparent container, so that the utilization of the SOR transparent container is improved, and the resource consumption is reduced. In an embodiment, the network selection information field of the hosting network includes a target information field, a second indication field, or a third indication field, where the target information field is used to carry the network selection information of the hosting network; the second indication field is used to indicate whether the time validity information and/or location validity information of the hosting network is carried; and the third indication field is used to indicate whether the local service information provided by the hosting network is carried.

Specifically, to enable the terminal to determine and select an appropriate hosting network more quickly and accurately, in this embodiment of the present invention, the network selection information field of the hosting network includes the target information field, the second indication field, and the third indication field, so that an indication of effectiveness of the hosting network is implemented, and then the terminal can select an appropriate hosting network and access the hosting network based on the indication of the effectiveness of the hosting network. Optionally, in a case that the second indication field indicates time validity information and/or location validity information of the hosting network, the terminal can select and access a hosting network based on the indicated time information and/or location information. If the second indication field does not indicate time validity information and/or location validity information of the hosting network, it indicates that the terminal can select and access a hosting network at any time and/or any location, or it indicates that the hosting network cannot access a hosting network at any time and/or any location. Optionally, in a case that the third indication field indicates the local service information provided by the hosting network, the terminal can perform a corresponding service after completing the access to a hosting network based on the indicated local service information.

For example, as shown in FIG. 6, network selection information of a hosting network carried in a network selection information field of the hosting network includes an identifier (hosting snpn1) of the hosting network, a validity condition (Validity condition) of the hosting network, and a list of local services (List of local service) of the hosting network, where the validity condition of the hosting network includes time validity information of the hosting network and location validity information of the hosting network. Optionally, the network selection information field of the hosting network includes a second indication field (Validity condition, VC) and a third indication field (LLS). The second indication field (Validity condition, VC) is used to indicate whether the time validity information and/or location validity information of the hosting network is carried; and the third indication field (LLS) is used to indicate whether the local service information provided by the hosting network is carried.

In the method of the above embodiment, the network selection information field of the hosting network includes the target information field, the second indication field, and the third indication field, so that the terminal can accurately determine a hosting network that can be selected and accessed, available time and available location of the hosting network, and a service that can be performed in the hosting network based on the target information field, the second indication field, and the third indication field. That is, the network selection information field of the hosting network includes the target information field, the second indication field, and the third indication field, so that an indication of effectiveness of the hosting network is implemented, detailed and accurate network selection information is provided for the terminal to select and access a hosting network, and then the terminal can quickly and accurately select and access a hosting network based on the network selection information field of the hosting network.

In an embodiment, before that a terminal receives steering of roaming SOR information sent by a first network side device, the method further includes:
The terminal sends capability indication information to the first network side device, where the capability indication information is used to indicate whether the terminal supports the network selection information of the conventional network and/or the network selection information of the hosting network.

Specifically, before that a terminal receives steering of roaming SOR information sent by a first network side device, the terminal may send capability indication information to the first network side device, where the capability indication information is used to indicate whether the terminal supports the network selection information of the conventional network and/or the network selection information of the hosting network. Further, after receiving the capability indication information sent by the terminal, the network side device can determine whether the terminal supports the network selection information of the conventional network and/or the network selection information of the hosting network, and can also determine whether the terminal can normally decode the network selection information of the conventional network and/or the network selection information of the hosting network sent by the network side device, and then based on the capability indication information of the terminal, the network side device can also determine whether to send the network selection information of the hosting network to the terminal, specific content of the network selection information of the hosting network to be sent to the terminal, and a specific manner of the sending, so that the network selection information of the hosting network sent by the network side device is more targeted. Therefore, the network selection information of the hosting network sent by the network side device can more accurately meet a network selection requirement for the hosting network of the terminal, and then the terminal can select and access a hosting network more quickly and effectively.

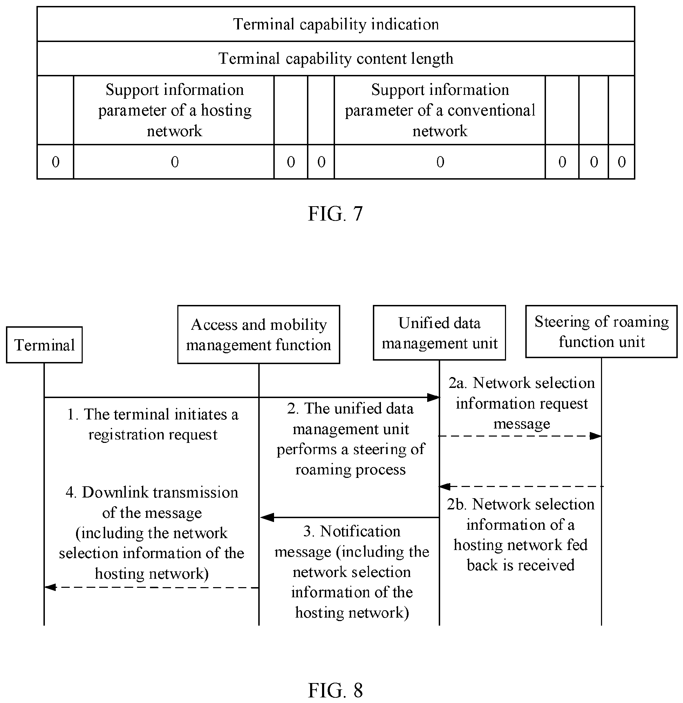

For example, the capability indication information sent by the terminal to the first network side device is shown in FIG. 7. If a support information parameter (SHosting SNPN SI) of the hosting network is 1, it indicates that the terminal supports the network selection information of the hosting network. Optionally, in a case that the terminal capability supports the network selection information of the conventional network, the terminal also supports the network selection information of the hosting network. In this case, the terminal does not need to separately report whether the terminal supports the network selection information of the hosting network to the network side device. It should be noted that, as shown in FIG. 7, the terminal capability information reported by the terminal may further include an indication of the support capability of the terminal for other functions such as single radio voice call continuity (SRVCC). Details are not described in the accompanying drawings of the embodiments of the present invention.

In the method of the above embodiment, the terminal sends the capability indication information to the network side device to indicate whether the terminal supports the network selection information of the conventional network and/or the network selection information of the hosting network, so that based on the capability information of the terminal, the network side device can accurately determine whether to send the network selection information of the hosting network to the terminal, specific content of the network selection information of the hosting network to be sent to the terminal, and a specific manner of the sending, and therefore the network selection information of the hosting network sent by the network side device is more targeted. Therefore, the network selection information of the hosting network sent by the network side device can more accurately meet a network selection requirement for the hosting network of the terminal, and then the terminal can select and access a hosting network more quickly and effectively.

In an embodiment, the capability indication information is carried in a registration request message sent by the terminal to a second network side device.

Specifically, the terminal can carry the capability indication information of the terminal when sending the registration request message to the second network side device, so that after receiving the registration request message, the second network side device can obtain, from the registration request message, the capability indication information of the terminal carried in the registration request message, and then determine whether to send the network selection information of the hosting network to the terminal based on the capability indication information of the terminal. Optionally, the second network side device may be a network device in a home network of the terminal or a network device in a roaming network of the terminal. For example, the second network side device is an AMF device in the roaming network of the terminal, and then the network side device AMF in a roaming place at which the terminal is located can send the obtained capability indication information of the terminal to a UDM device in the home network of the terminal, and the UDM device in the home network of the terminal can accurately determine whether to send the network selection information of the hosting network to the terminal and a specific manner of sending the network selection information of the hosting network to the terminal based on the capability indication information of the terminal.

In the method of the above embodiment, the terminal sends the registration request message carrying the capability indication information of the terminal to the network side device, and then based on the capability indication information of the terminal in the registration request message, the network side device can accurately determine whether to send the network selection information of the hosting network to the terminal and a specific manner of sending the network selection information of the hosting network to the terminal, thereby enabling the terminal to select and access a hosting network more effectively based on the network selection information.

In an embodiment, that a terminal receives steering of roaming SOR information sent by a first network side device includes:

The terminal receives the steering of roaming SOR information sent by the first network side device during network registration by the terminal; and/or
the terminal receives the steering of roaming SOR information sent by the first network side device after the terminal completes the network registration.

Specifically, after receiving the capability indication information of the terminal in the registration request information sent by the terminal, the first network side device can send the network selection information of the hosting network to the terminal based on the capability indication information of the terminal, so that the terminal can select and access a hosting network based on the network selection information of the hosting network in the received steering of roaming SOR information during network registration. Optionally, after the terminal completes the network registration, the first network side device can send updated network selection information of the hosting network to the terminal in a case that the network selection information of the hosting network changes, so that the terminal can accurately select and access a hosting network in a timely manner based on the updated network selection information of the hosting network.

For example, an interactive process of the method for obtaining network selection information of a hosting network according to an embodiment of the present invention is shown in FIG. 8. During network registration by a terminal, the terminal receives steering of roaming SOR information that includes the network selection information of the hosting network and that is sent by a first network side device. That is, the first network side device provides network selection information of the hosting network to the terminal during the network registration by the terminal. The specific interactive process is as follows:
Step 1: The terminal initiates a registration request message to the network side device, where the registration request message carries capability indication information of the terminal, and the capability indication information is used to indicate whether the terminal supports the network selection information of the hosting network.
Step 2: After a unified data management UDM unit receives the capability indication information sent by the terminal, if the terminal supports the network selection information of the hosting network, the unified data management UDM unit provides network selection information of the hosting network to the terminal by using a SOR process. For example, in a case that the network selection information of the hosting network is updated, the network side device UDM sends updated network selection information of the hosting network to the terminal.

Optionally, the network selection information of the hosting network includes an identifier of the hosting network, time validity information of the hosting network, location validity information of the hosting network, and local service information provided by the hosting network.

Steps 2a and 2b: Optionally, the network side device UDM can request and obtain the network selection information of the hosting network from a steering of roaming application function SOR AF unit. Optionally, the network side device UDM sends a network selection request message (Nsoraf_SoR_Get request) to the steering of roaming application function SOR AF unit, and receives the network selection information (Nsoraf_SoR_Get Response) of the hosting network fed back by the steering of roaming application function SOR AF unit.

Steps 3 and 4: The network side device UDM sends the network selection information of the hosting network (Nudm_SDM_Notification, including the network selection information of the hosting network) to the terminal by using an AMF. Optionally, the SOR information sent by the network side device UDM to the terminal further includes first indication information, which indicates the terminal to select a network by using the obtained network selection information of the hosting network.

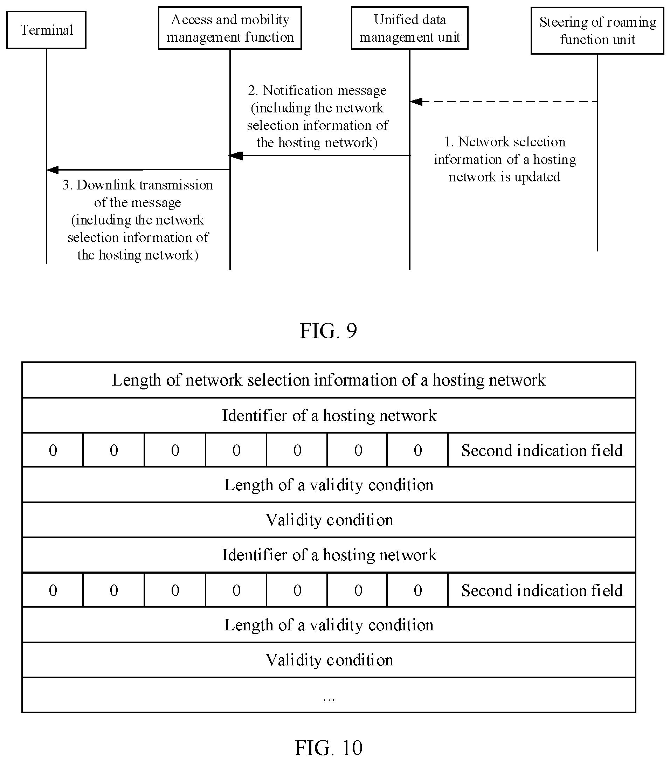

For example, another interactive process of the method for obtaining network selection information of a hosting network according to an embodiment of the present invention is shown in FIG. 9. After a terminal completes network registration, the terminal receives steering of roaming SOR information sent by a first network side device. That is, after the terminal completes the registration, a network side device UDM provides the network selection information of the hosting network to the terminal. The specific interactive process is as follows:

Step 1: A steering of roaming application function SOR AF unit or the network side device UDM provides the network selection information of the hosting network to the terminal by using a SOR process in a case that the network selection information of the hosting network is updated, that is, the steering of roaming application function SOR AF unit or the network side device UDM sends updated network selection information of the hosting network to the terminal.

Steps 2 and 3: The network side device UDM sends the network selection information of the hosting network to the terminal by using an AMF.

In the method of the above embodiment, the terminal can select and access a hosting network based on the network selection information of the hosting network in the received steering of roaming SOR information in a scenario during the network registration by the terminal and/or that the terminal completes the network registration, so that the terminal can obtain the network selection information of the hosting network in different scenarios. Therefore, the terminal can select and access a hosting network based on the network selection information of the hosting network in the SOR information in a plurality of scenarios, thereby improving efficiency of the terminal selecting and accessing a hosting network.

In an embodiment, the first indication field is further used to indicate the terminal to select a network by using the obtained network selection information of the hosting network.

Specifically, the first indication field is further used to indicate the terminal to select a network by using the obtained network selection information of the hosting network. That is, in a case that the network selection information of the hosting network is not changed, the network side device indicates, by using the first indication field, the terminal to select a network by using the obtained network selection information of the hosting network, so that the network side device does not need to repeatedly send the network selection information of the hosting network to the terminal, thereby saving network resources.

Optionally, when the first indication field is 0, it indicates that the SOR information does not carry the network selection information of the hosting network, that is, the terminal is indicated to select and access a hosting network by using obtained existing network selection information of the hosting network, without repeatedly sending the network selection information of the hosting network to the terminal, thereby saving network resources.

In the method of the above embodiment, the first indication field indicates the terminal to select a network by using the obtained network selection information of the hosting network, so that the network side device does not need to repeatedly send the network selection information of the hosting network to the terminal in a case that the network selection information of the hosting network is not changed, thereby saving network resources.

For example, in the method for obtaining network selection information of a hosting network according to this embodiment of the present invention, the network selection information of the hosting SNPN may be added to the SOR container (SOR transparent container), that is, the existing SOR container is reused and the network selection information of the hosting network is added to the downlink SOR container.

Optionally, as shown in FIG. 6, the network selection information (SOR-hosting-SNPN-SI) of the hosting network may include a list of local services (List of local service 1).

Optionally, as shown in FIG. 10, the network selection information (SOR-hosting-SNPN-SI) of the hosting network may alternatively not include a list of local services (List of local service1).

For example, in the method for obtaining network selection information of a hosting network according to this embodiment of the present invention, network selection information (SOR-SNPN-SI) of a conventional network may alternatively be enhanced in the SOR container (SOR transparent container), and network selection information of a hosting network may be added to the network selection information of the conventional network. That is, the network selection information (SOR-Hosting-SNPN-SI) of the hosting network is used as a part of the network selection information of the conventional network.

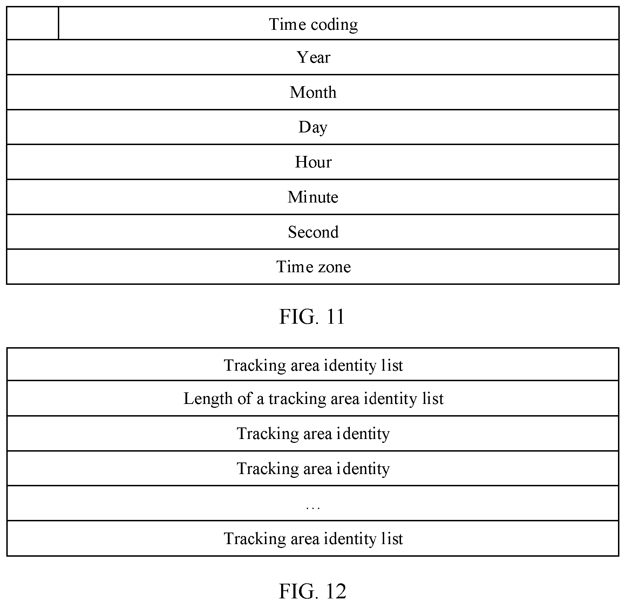

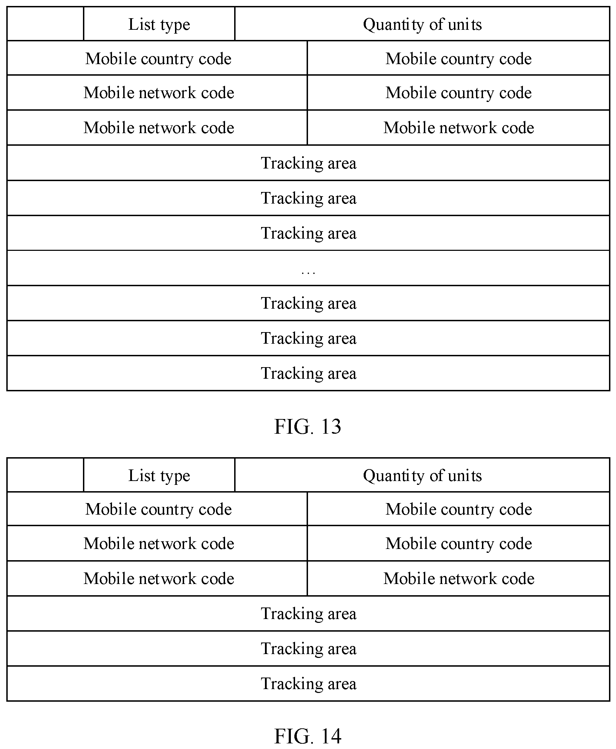

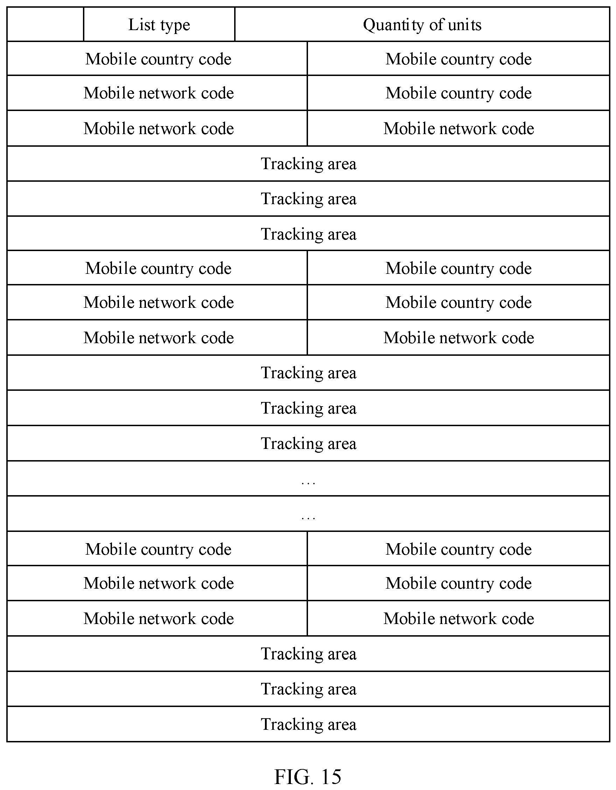

Optionally, coding of the time validity information of the hosting network in the network selection information of the hosting network is shown in FIG. 11. Optionally, coding of the location validity information of the hosting network in the network selection information of the hosting network is shown in FIG. 12 to FIG. 15.

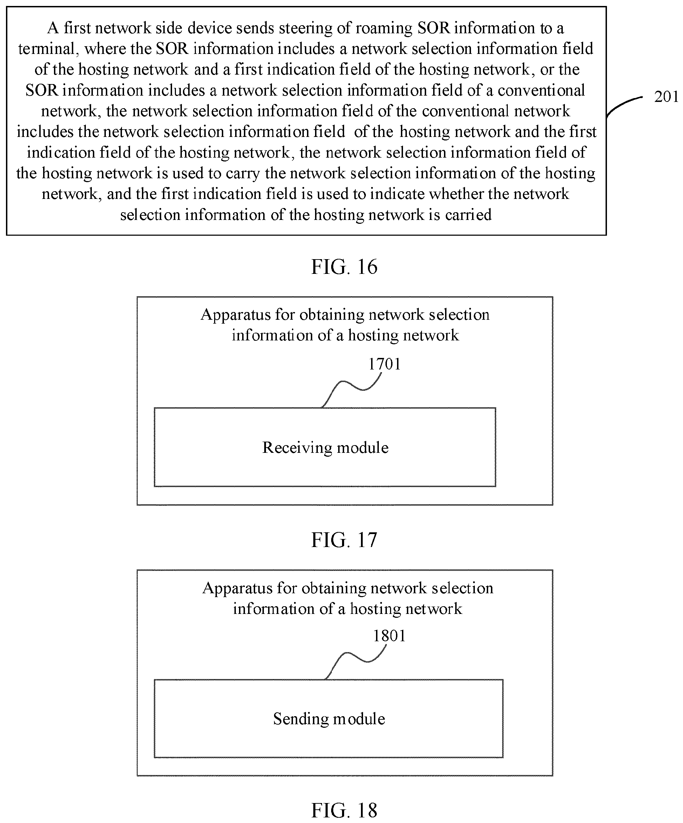

FIG. 16 is a schematic flowchart of a method for obtaining network selection information of a hosting network according to an embodiment of the present invention. As shown in FIG. 16, the method for obtaining network selection information of a hosting network according to this embodiment of the present invention includes:

Step 201: A first network side device sends steering of roaming SOR information to a terminal, where the SOR information includes a network selection information field and a first indication field of the hosting network, or the SOR information includes a network selection information field of a conventional network, the network selection information field of the conventional network includes the network selection information field and the first indication field of the hosting network, the network selection information field of the hosting network is used to carry the network selection information of the hosting network, and the first indication field is used to indicate whether the network selection information of the hosting network is carried.

Optionally, the network selection information of the hosting network includes at least one of the following:
an identifier of the hosting network, time validity information of the hosting network, location validity information of the hosting network, and local service information provided by the hosting network.

Optionally, the SOR information is carried by a SOR transparent container; and
the SOR transparent container includes the network selection information field and the first indication field of the hosting network, or
the SOR transparent container includes the network selection information field of the conventional network, and the network selection information field of the conventional network includes the network selection information field and the first indication field of the hosting network.

Optionally, the network selection information field of the hosting network includes a target information field, a second indication field, or a third indication field, where the target information field is used to carry the network selection information of the hosting network; the second indication field is used to indicate whether the time validity information and/or location validity information of the hosting network is carried; and the third indication field is used to indicate whether the local service information provided by the hosting network is carried.

Optionally, before that a first network side device sends steering of roaming SOR information to a terminal, the method further includes:
the first network side device receives capability indication information from the terminal; and
that a first network side device sends steering of roaming SOR information to a terminal includes:
   the first network side device sends the steering of roaming SOR information to the terminal based on the capability indication information.

Optionally, the first network side device receives a registration request message sent by the terminal, where the registration request message carries the capability indication information.

Optionally, that a first network side device sends steering of roaming SOR information to a terminal includes:
the first network side device sends the steering of roaming SOR information to the terminal when the terminal performs network registration; and/or
the first network side device sends the steering of roaming SOR information to the terminal in a case that the network selection information of the hosting network is updated.

Optionally, the first indication field is further used to indicate the terminal to select a network by using the obtained network selection information of the hosting network.

Optionally, the method for obtaining network selection information of a hosting network further includes:
the first network side device sends a first request message to a second network side device, where the first request message is used to request to obtain the network selection information of the hosting network; and
the first network side device receives the network selection information of the hosting network fed back by the second network side device.

A specific implementation process and technical effects of the method in this embodiment are similar to those in the terminal side method embodiment. For details, reference may be made to the detailed descriptions in the terminal side method embodiment. Details are not described herein.

An execution body of the method for obtaining network selection information of a hosting network according to this embodiment of the present invention may be an apparatus for obtaining network selection information of a hosting network. The apparatus for obtaining network selection information of a hosting network according to this embodiment of the present invention is described with an example in which the apparatus for obtaining network selection information of a hosting network performs the method for obtaining network selection information of a hosting network in the embodiment of the present invention.

FIG. 17 is a first schematic diagram of a structure of an apparatus for obtaining network selection information of a hosting network according to an embodiment of the present invention. As shown in FIG. 17, the apparatus for obtaining network selection information of a hosting network according to this embodiment includes:
a receiving module 1701, configured to receive steering of roaming SOR information sent by a first network side device, where the SOR information includes a network selection information field and a first indication field of the hosting network, or the SOR information includes a network selection information field of a conventional network, the network selection information field of the conventional network includes the network selection information field and the first indication field of the hosting network, the network selection information field of the hosting network is used to carry the network selection information of the hosting network, and the first indication field is used to indicate whether the network selection information of the hosting network is carried.

Optionally, the network selection information of the hosting network includes at least one of the following:
an identifier of the hosting network, time validity information of the hosting network, location validity information of the hosting network, and local service information provided by the hosting network.

Optionally, the SOR information is carried by a SOR transparent container; and
the SOR transparent container includes the network selection information field and the first indication field of the hosting network, or
the SOR transparent container includes the network selection information field of the conventional network, and the network selection information field of the conventional network includes the network selection information field and the first indication field of the hosting network.

Optionally, the network selection information field of the hosting network includes a target information field, a second indication field, or a third indication field, where the target information field is used to carry the network selection information of the hosting network; the second indication field is used to indicate whether the time validity information and/or location validity information of the hosting network is carried; and the third indication field is used to indicate whether the local service information provided by the hosting network is carried.

Optionally, the apparatus for obtaining network selection information of a hosting network further includes a sending module, and the sending module is configured to send capability indication information to the first network side device, where the capability indication information is used to indicate whether the terminal supports the network selection information of the conventional network and/or the network selection information of the hosting network.

Optionally, the capability indication information is carried in a registration request message sent by the terminal to a second network side device.

Optionally, the receiving module 1701 is configured to receive the steering of roaming SOR information sent by the first network side device during network registration by the terminal; and/or
receive the steering of roaming SOR information sent by the first network side device after the terminal completes the network registration.

Optionally, the first indication field is further used to indicate the terminal to select a network by using the obtained network selection information of the hosting network.

The apparatus according to this embodiment may be configured to perform the method according to any one of the aforementioned terminal side method embodiments. A specific implementation process and technical effects of the apparatus in this embodiment are the same as those in the terminal side method embodiments. For details, reference may be made to the detailed descriptions in the terminal side method embodiments. Details are not described herein.

FIG. 18 is a second schematic diagram of a structure of an apparatus for obtaining network selection information of a hosting network according to an embodiment of the present invention. As shown in FIG. 18, the apparatus for obtaining network selection information of a hosting network according to this embodiment includes:
a sending module 1801, configured to send steering of roaming SOR information to a terminal, where the SOR information includes a network selection information field and a first indication field of the hosting network, or the SOR information includes a network selection information field of a conventional network, the network selection information field of the conventional network includes the network selection information field and the first indication field of the hosting network, the network selection information field of the hosting network is used to carry the network selection information of the hosting network, and the first indication field is used to indicate whether the network selection information of the hosting network is carried.

Optionally, the network selection information of the hosting network includes at least one of the following:
an identifier of the hosting network, time validity information of the hosting network, location validity information of the hosting network, and local service information provided by the hosting network.

Optionally, the SOR information is carried by a SOR transparent container; and
the SOR transparent container includes the network selection information field and the first indication field of the hosting network, or
the SOR transparent container includes the network selection information field of the conventional network, and the network selection information field of the conventional network includes the network selection information field and the first indication field of the hosting network.

Optionally, the network selection information field of the hosting network includes a target information field, a second indication field, or a third indication field, where the target information field is used to carry the network selection information of the hosting network; the second indication field is used to indicate whether the time validity information and/or location validity information of the hosting network is carried; and the third indication field is used to indicate whether the local service information provided by the hosting network is carried.

Optionally, the apparatus for obtaining network selection information of a hosting network further includes a receiving module, configured to receive capability indication information from the terminal.

Optionally, the sending module 1801 is configured to send the steering of roaming SOR information to the terminal based on the capability indication information.

Optionally, the receiving module is further configured to receive a registration request message sent by the terminal, where the registration request message carries the capability indication information.

Optionally, the sending module 1801 is configured to send the steering of roaming SOR information to the terminal when the terminal performs network registration; and/or
send the steering of roaming SOR information to the terminal in a case that the network selection information of the hosting network is updated.

Optionally, the first indication field is further used to indicate the terminal to select a network by using the obtained network selection information of the hosting network.

Optionally, the sending module 1801 is further configured to send a first request message to a second network side device, where the first request message is used to request to obtain the network selection information of the hosting network; and
the receiving module is further configured to receive the network selection information of the hosting network fed back by the second network side device.

The apparatus according to this embodiment may be configured to perform the method according to any one of the aforementioned method embodiments of the first network side device side. A specific implementation process and technical effects of the apparatus in this embodiment are the same as those in the method embodiments of the first network side device side. For details, reference may be made to the detailed descriptions in the method embodiments of the first network side device side. Details are not described herein.

The apparatus for obtaining network selection information of a hosting network in this embodiment of the present invention may be an electronic device, such as an electronic device with an operating system, or a component such as an integrated circuit or a chip in the electronic device. The electronic device may be a terminal or another device other than the terminal. For example, the terminal may include, but is not limited to, the types of the terminal 11 listed above, and the another device may be a server, a network attached storage (Network Attached Storage, NAS), or the like, which is not specifically limited in this embodiment of the present invention.

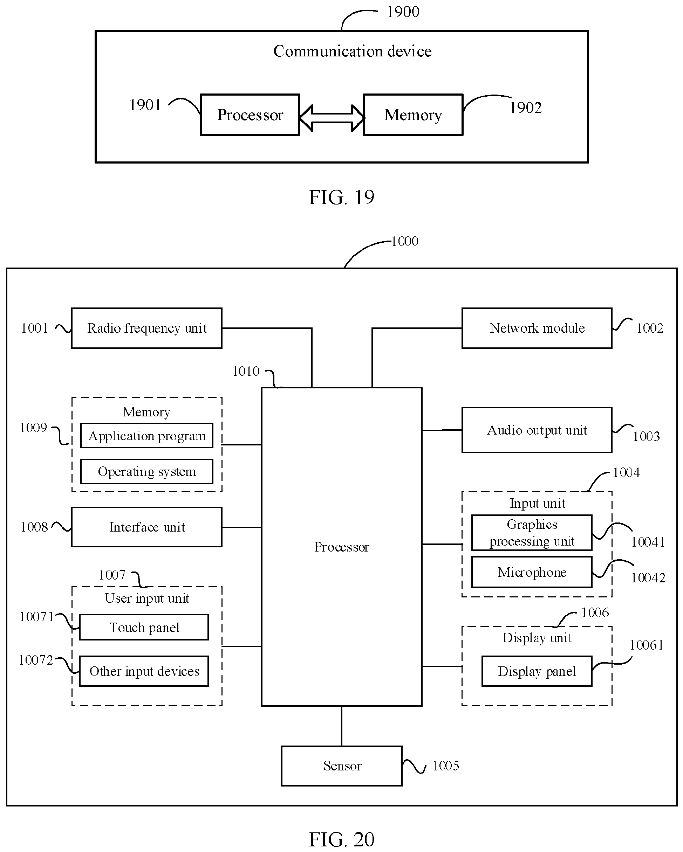

Optionally, as shown in FIG. 19, an embodiment of the present invention further provides a communication device 1900, including a processor 1901 and a memory 1902. The memory 1902 stores a program or instructions executable on the processor 1901. For example, when the communication device 1900 is a terminal, and when the program or instructions are executed by the processor 1901, each step of the above-mentioned embodiment of the method for obtaining network selection information of a hosting network is implemented, which can achieve the same technical effect. When the communication device 1900 is a network side device, when the program or instructions are executed by the processor 1901, each step of the above-mentioned embodiment of the method for obtaining network selection information of a hosting network is implemented, which can achieve the same technical effect. To avoid repetition, details are not described herein.

An embodiment of the present invention further provides a terminal, including a processor and a communication interface. The communication interface is configured to receive steering of roaming SOR information sent by a first network side device. The SOR information includes a network selection information field and a first indication field of a hosting network, or the SOR information includes a network selection information field of a conventional network, and the network selection information field of the conventional network includes the network selection information field and the first indication field of the hosting network. The network selection information field of the hosting network is used to carry network selection information of the hosting network, and the first indication field is used to indicate whether the network selection information of the hosting network is carried. The terminal embodiment corresponds to the above-mentioned terminal side method embodiment, and each implementation process and implementation of the above-mentioned method embodiment can be applied to the terminal embodiment, which can achieve the same technical effect. Specifically, FIG. 20 is a schematic diagram of a hardware structure of a terminal according to an embodiment of the present invention.

The terminal 1000 includes, but is not limited to, at least some components of a radio frequency unit 1001, a network module 1002, an audio output unit 1003, an input unit 1004, a sensor 1005, a display unit 1006, a user input unit 1007, an interface unit 1008, a memory 1009, and a processor 1010.

It can be understood by a person skilled in the art that the terminal 1000 may further include a power supply (such as a battery) for supplying power to various components. The power supply may be logically connected to the processor 1010 by using a power management system, so as to achieve charging, discharging, power consumption management, and other functions by using the power management system. The terminal structure shown in FIG. 20 does not constitute a limitation on the terminal. The terminal may include more or fewer components than those shown, or combine some components, or have different component arrangements. Details are not described herein.

It should be understood that in this embodiment of the present invention, the input unit 1004 may include a graphics processing unit (Graphics Processing Unit, GPU) 10041 and a microphone 10042. The graphics processing unit 10041 processes image data of a still picture or a video that is obtained by an image acquisition apparatus (for example, a camera) in a video acquisition mode or an image acquisition mode. The display unit 1006 may include a display panel 10061, and the display panel 10061 may be configured in the form of a liquid crystal display, an organic light emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a functional key (such as a volume control key or an on/off key), a track ball, a mouse, and a joystick, which is not described in detail herein.

In the embodiment of the present invention, after receiving downlink data from a network side device, the radio frequency unit 1001 may transmit the data to the processor 1010 for processing. In addition, the radio frequency unit 1001 may send uplink data to the network side device. Generally, the radio frequency unit 1001 includes, but is not limited to, an antenna, at least one amplifier, a transceiver, a coupler, a low noise amplifier, and a duplexer.

The memory 1009 may be configured to store a software program or instructions and various data. The memory 1009 may mainly include a first storage area for storing a program or instructions and a second storage area for storing data, where the first storage program or instruction area may store an operating system, an application program or instructions required for at least one function (such as a sound playing function and an image playing function), and the like. In addition, the memory 1009 may include a volatile memory or a non-volatile memory, or the memory 1009 may include both a volatile memory and a non-volatile memory. The memory may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiment of the present invention includes, but is not limited to, these and any other suitable types of memories, for example, at least one disk storage device, a flash memory device, or another non-volatile solid-state storage device.

The processor 1010 may include one or more processing units. Optionally, the processor 1010 can integrate an application processor and a modem processor, where the application processor mainly processes operations involving an operating system, a user interface, an application program or instructions, and the like, and the modem processor mainly processes wireless communication signals, such as a baseband processor. It can be understood that, the modem processor may not be integrated into the processor 1010.

The radio frequency unit 1001 is configured to receive steering of roaming SOR information sent by a first network side device, where the SOR information includes a network selection information field and a first indication field of a hosting network, or the SOR information includes a network selection information field of a conventional network, the network selection information field of the conventional network includes the network selection information field and the first indication field of the hosting network, the network selection information field of the hosting network is used to carry network selection information of the hosting network, and the first indication field is used to indicate whether the network selection information of the hosting network is carried.

Optionally, the network selection information of the hosting network includes at least one of the following:
an identifier of the hosting network, time validity information of the hosting network, location validity information of the hosting network, and local service information provided by the hosting network.

Optionally, the SOR information is carried by a SOR transparent container; and
the SOR transparent container includes the network selection information field and the first indication field of the hosting network, or
the SOR transparent container includes the network selection information field of the conventional network, and the network selection information field of the conventional network includes the network selection information field and the first indication field of the hosting network.

Optionally, the network selection information field of the hosting network includes a target information field, a second indication field, or a third indication field, where the target information field is used to carry the network selection information of the hosting network; the second indication field is used to indicate whether the time validity information and/or location validity information of the hosting network is carried; and the third indication field is used to indicate whether the local service information provided by the hosting network is carried.

Optionally, the processor 1010 is further configured to send capability indication information to the first network side device, where the capability indication information is used to indicate whether the terminal supports the network selection information of the conventional network and/or the network selection information of the hosting network.

Optionally, the capability indication information is carried in a registration request message sent by the terminal to a second network side device.

Optionally, the radio frequency unit 1001 is further configured to receive the steering of roaming SOR information sent by the first network side device during network registration by the terminal; and/or
receive the steering of roaming SOR information sent by the first network side device after the terminal completes the network registration.

Optionally, the first indication field is further used to indicate the terminal to select a network by using the obtained network selection information of the hosting network.

An embodiment of the present invention further provides a network side device, including a processor and a communication interface. The communication interface is configured to send steering of roaming SOR information to a terminal. The SOR information includes a network selection information field and a first indication field of a hosting network, or the SOR information includes a network selection information field of a conventional network, and the network selection information field of the conventional network includes the network selection information field and the first indication field of the hosting network. The network selection information field of the hosting network is used to carry network selection information of the hosting network, and the first indication field is used to indicate whether the network selection information of the hosting network is carried. The network side device embodiment corresponds to the above-mentioned method embodiment for the network side device, and each implementation process and implementation of the above-mentioned method embodiment can be applied to the network side device embodiment, which can achieve the same technical effect.

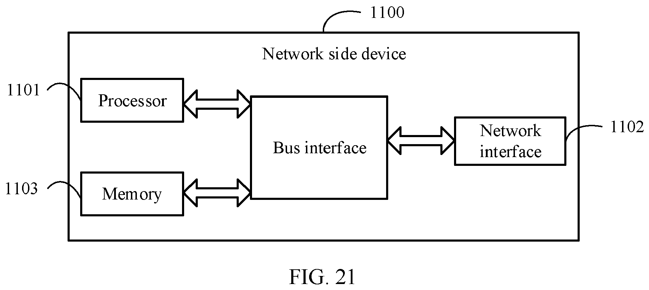

Specifically, an embodiment of this application further provides a network side device. As shown in FIG. 21, the network side device 1100 includes a processor 1101, a network interface 1102, and a memory 1103. The network interface 1102 is, for example, a common public radio interface (common public radio interface, CPRI).

Specifically, the network side device 1100 according to this embodiment of this application further includes: instructions or a program stored in the memory 1103 and runnable on the processor 1101. The processor 1101 invokes the instructions or program in the memory 1103 to perform the method performed by each module shown in FIG. 17 and FIG. 18, to achieve the same technical effect. To avoid repetition, details are not described herein.

An embodiment of the present invention further provides a readable storage medium. The readable storage medium stores a program or instructions. When the program or instructions are executed by a processor, each process of the above-mentioned embodiment of the method for obtaining network selection information of a hosting network is implemented, which can achieve the same technical effect. To avoid repetition, details are not described herein.

The processor is the processor in the terminal in the above-mentioned embodiment. The readable storage medium includes a computer-readable storage medium, such as computer read-only memory ROM, a random access memory RAM, a magnetic disk, or a compact disc.

An embodiment of the present invention further provides a chip. The chip includes a processor and a communication interface. The communication interface is coupled to the processor, and the processor is configured to run a program or instructions to implement each process of the above-mentioned embodiment of the method for obtaining network selection information of a hosting network, which can achieve the same technical effect. To avoid repetition, details are not described herein.

It should be understood that the chip mentioned in the embodiment of the present invention may also be referred to as a system on chip, a system chip, a chip system, a system-on-a-chip, or the like.

An embodiment of the present invention further provides a computer program/program product. The computer program/program product is stored on a storage medium. The computer program/program product is executed by at least one processor to implement each process of the above-mentioned embodiment of the method for obtaining network selection information of a hosting network, which can achieve the same technical effect. To avoid repetition, details are not described herein.

An embodiment of the present invention further provides a system for obtaining network selection information of a hosting network, including a terminal and a network side device. The terminal may be configured to perform the steps of the method for obtaining network selection information of a hosting network described above, and the network side device may be configured to perform the steps of the method for obtaining network selection information of a hosting network described above.

It should be noted that terms "including", "comprising" or any other variants thereof are intended to cover non-exclusive inclusion, so that a process, method, article, or apparatus including a series of elements includes not only those elements but also other elements not explicitly listed, or elements inherent to such a process, method, article, or apparatus. Without further limitation, an element defined by the phrase "including a ..." does not exclude the presence of an additional identical element in the process, method, article, or apparatus including the element. In addition, it should be noted that the scope of the method and apparatus in the implementations of this application is not limited to performing functions in the order shown or discussed, but also may include performing functions in a substantially simultaneous manner or in a reverse order based on the functions involved. For example, the described method may be performed in an order different from that described, and various steps may be further added, omitted or combined. In addition, features described with reference to some examples can be combined in other examples.

By the description of the above implementations, a person skilled in the art can clearly understand that the method in the above-mentioned embodiments may be implemented by software and a necessary general-purpose hardware platform, or certainly, by hardware, but the former is a better implementation in many cases. Based on this understanding, the technical solution of this application essentially, or a part contributing to the prior art, may be embodied in a form of a computer software product. The computer software product is stored on a storage medium (for example, a ROM/RAM, a magnetic disk and a compact disc), and includes a plurality of instructions to cause a terminal (which may be a mobile phone, a computer, a server, an air-conditioner, a network device, or the like) to perform the method according to each embodiment of this application.

The embodiments of this application are described above with reference to the accompanying drawings, but this application is not limited to the specific implementations described above, and the specific implementations described above are merely illustrative and not restrictive. A person of ordinary skill in the art may further make many forms under the teaching of this application without departing from the purpose of this application and the protection scope of the claims, and these forms all fall within the protection scope of this application.

## Claims

1. A method for obtaining network selection information of a hosting network, comprising:
receiving, by a terminal, steering of roaming SOR information sent by a first network side device, wherein the SOR information comprises a network selection information field of the hosting network and a first indication field of the hosting network, or the SOR information comprises a network selection information field of a conventional network, the network selection information field of the conventional network comprises the network selection information field of the hosting network and the first indication field of the hosting network, the network selection information field of the hosting network is used to carry the network selection information of the hosting network, and the first indication field is used to indicate whether the network selection information of the hosting network is carried.

2. The method for obtaining network selection information of a hosting network according to claim 1, wherein the network selection information of the hosting network comprises at least one of the following:
an identifier of the hosting network, time validity information of the hosting network, location validity information of the hosting network, and local service information provided by the hosting network.

3. The method for obtaining network selection information of a hosting network according to claim 1 or 2, wherein
the SOR information is carried by a SOR transparent container; and
the SOR transparent container comprises the network selection information field of the hosting network and the first indication field of the hosting network, or
the SOR transparent container comprises the network selection information field of the conventional network, and the network selection information field of the conventional network comprises the network selection information field of the hosting network and the first indication field of the hosting network.

4. The method for obtaining network selection information of a hosting network according to claim 1 or 2, wherein
the network selection information field of the hosting network comprises a target information field, a second indication field, or a third indication field; the target information field is used to carry the network selection information of the hosting network; the second indication field is used to indicate whether the time validity information and/or location validity information of the hosting network is carried; and the third indication field is used to indicate whether the local service information provided by the hosting network is carried.

5. The method for obtaining network selection information of a hosting network according to claim 1 or 2, wherein before the receiving, by the terminal, the SOR information sent by the first network side device, the method further comprises:
sending, by the terminal, capability indication information to the first network side device, wherein the capability indication information is used to indicate whether the terminal supports the network selection information of the conventional network and/or the network selection information of the hosting network.

6. The method for obtaining network selection information of a hosting network according to claim 5, wherein
the capability indication information is carried in a registration request message sent by the terminal to a second network side device.

7. The method for obtaining network selection information of a hosting network according to claim 1 or 2, wherein the receiving, by the terminal, the SOR information sent by the first network side device comprises:
receiving, by the terminal, the SOR information sent by the first network side device during network registration by the terminal; and/or
receiving, by the terminal, the SOR information sent by the first network side device after the terminal completes the network registration.

8. The method for obtaining network selection information of a hosting network according to claim 1 or 2, wherein the first indication field is further used to indicate the terminal to select a network by using the obtained network selection information of the hosting network.

9. A method for obtaining network selection information of a hosting network, comprising:
sending, by a first network side device, steering of roaming SOR information to a terminal, wherein the SOR information comprises a network selection information field of the hosting network and a first indication field of the hosting network, or the SOR information comprises a network selection information field of a conventional network, the network selection information field of the conventional network comprises the network selection information field of the hosting network and the first indication field of the hosting network, the network selection information field of the hosting network is used to carry the network selection information of the hosting network, and the first indication field is used to indicate whether the network selection information of the hosting network is carried.

10. The method for obtaining network selection information of a hosting network according to claim 9, wherein the network selection information of the hosting network comprises at least one of the following:
an identifier of the hosting network, time validity information of the hosting network, location validity information of the hosting network, and local service information provided by the hosting network.

11. The method for obtaining network selection information of a hosting network according to claim 9 or 10, wherein
the SOR information is carried by a SOR transparent container; and
the SOR transparent container comprises the network selection information field of the hosting network and the first indication field of the hosting network, or
the SOR transparent container comprises the network selection information field of the conventional network, and the network selection information field of the conventional network comprises the network selection information field of the hosting network and the first indication field of the hosting network.

12. The method for obtaining network selection information of a hosting network according to claim 9 or 10, wherein
the network selection information field of the hosting network comprises a target information field, a second indication field, or a third indication field; the target information field is used to carry the network selection information of the hosting network; the second indication field is used to indicate whether the time validity information and/or location validity information of the hosting network is carried; and the third indication field is used to indicate whether the local service information provided by the hosting network is carried.

13. The method for obtaining network selection information of a hosting network according to claim 9 or 10, wherein before the sending, by the first network side device, the SOR information to the terminal, the method further comprises:
receiving, by the first network side device, capability indication information from the terminal; and
the sending, by the first network side device, the SOR information to a terminal comprises:
sending, by the first network side device, the SOR information to the terminal based on the capability indication information.

14. The method for obtaining network selection information of a hosting network according to claim 13, wherein
the first network side device receives a registration request message sent by the terminal, wherein the registration request message carries the capability indication information.

15. The method for obtaining network selection information of a hosting network according to claim 9 or 10, wherein the sending, by the first network side device, the SOR information to the terminal comprises:
sending, by the first network side device, the SOR information to the terminal when the terminal performs network registration; and/or
sending, by the first network side device, the SOR information to the terminal in a case that the network selection information of the hosting network is updated.

16. The method for obtaining network selection information of a hosting network according to claim 9 or 10, wherein the first indication field is further used to indicate the terminal to select a network by using the obtained network selection information of the hosting network.

17. The method for obtaining network selection information of a hosting network according to claim 9 or 10, wherein the method further comprises:
sending, by the first network side device, a first request message to a second network side device, wherein the first request message is used to request to obtain the network selection information of the hosting network; and
receiving, by the first network side device, the network selection information of the hosting network fed back by the second network side device.

18. An apparatus for obtaining network selection information of a hosting network, comprising:
a receiving module, configured to receive steering of roaming SOR information sent by a first network side device, wherein the SOR information comprises a network selection information field of the hosting network and a first indication field of the hosting network, or the SOR information comprises a network selection information field of a conventional network, the network selection information field of the conventional network comprises the network selection information field of the hosting network and the first indication field of the hosting network, the network selection information field of the hosting network is used to carry the network selection information of the hosting network, and the first indication field is used to indicate whether the network selection information of the hosting network is carried.

19. An apparatus for obtaining network selection information of a hosting network, comprising:
a sending module, configured to send steering of roaming SOR information to a terminal, wherein the SOR information comprises a network selection information field of the hosting network and a first indication field of the hosting network, or the SOR information comprises a network selection information field of a conventional network, the network selection information field of the conventional network comprises the network selection information field of the hosting network and the first indication field of the hosting network, the network selection information field of the hosting network is used to carry the network selection information of the hosting network, and the first indication field is used to indicate whether the network selection information of the hosting network is carried.

20. A terminal, comprising a processor and a memory, wherein the memory stores a program or instructions executable on the processor, and when the program or instructions are executed by the processor, the steps of the method for obtaining network selection information of a hosting network according to any one of claims 1 to 8 are implemented.

21. A network side device, comprising a processor and a memory, wherein the memory stores a program or instructions executable on the processor, and when the program or instructions are executed by the processor, the steps of the method for obtaining network selection information of a hosting network according to any one of claims 9 to 17 are implemented.

22. A readable storage medium, wherein the readable storage medium stores a program or instructions, and when the program or instructions are executed by a processor, the steps of the method for obtaining network selection information of a hosting network according to any one of claims 1 to 8 are implemented, or the steps of the method for obtaining network selection information of a hosting network according to any one of claims 9 to 17 are implemented.
